# EUROPEAN PATENT SPECIFICATION

(11) **EP 4 321 425 B1**
(45) Date of publication and mention of the grant of the patent: **09.04.2025**
(21) Application number: 22190008.7
(22) Date of filing: 11.08.2022
(51) Int. Cl.: B63B 59/04, B29C 43/00, B05D 7/04, B29C 43/24, B29C 43/28, B29C 43/30, B29C 63/02, B05D 5/08, B32B 37/00, B32B 37/04

(54) **ROLL WITH SELF-FUSING AND ANTIFOULING PROTECTION TAPE AND USE OF THE TAPE FOR WRAPPING OBJECTS**
ROLLE MIT SELBSTSCHMELZENDEM UND FÄULNISHEMMENDEM SCHUTZBAND UND VERWENDUNG DES BANDES ZUM UMHÜLLEN VON GEGENSTÄNDEN
ROULEAU AVEC RUBAN DE PROTECTION AUTO-FUSIBLE ET ANTISALISSURE ET UTILISATION DU RUBAN POUR EMBALLER DES OBJETS

(43) Date of publication of application: 14.02.2024
(73) Proprietor: OCEAN-Tape GmbH, 22587 Hamburg (DE)
(72) Inventor: KOSLOWSKI, Grzegorz, 56727 Mayen (DE)
(74) Representative: Eisenführ Speiser

(56) References cited:
- DE-A1- 102011 050 433
- JP-B2- 6 219 551
- US-A- 4 814 227
- US-A1- 2013 048 211

## Description

The invention relates to a calender process for preparing a roll comprising an elastic, self-fusing and antifouling protection tape for applying onto (and preferably wrapping of) objects, in particular of those sections of the object that are to be exposed to freshwater or seawater. The present invention further relates to the roll. Also, the invention relates to a kit comprising the roll and sealing means and/or priming agent. Furthermore, the invention relates to a method of using the roll or kit, for covering an object. Finally, the invention relates to an object with applied tape.

Biological fouling (typically simply referred to as fouling) is the settling of a variety of maritime creatures on objects, in particular on those parts of the object that are in contact with seawater for an extended period of time. Specifically, the growth of microorganisms, plants, algae, or small animals (such as mussels and barnacles) on surfaces made from wood, metal or plastic (such as ships and submarine hulls, but also underwater construction and desalination plants) constitutes a global problem. In some instances, even a vessel's hull structure and propulsion systems can be damaged by fouling. Fouling increases both the hydrodynamic volume of a vessel and hydrodynamic friction, leading to an increased drag of up to 60%. It has been estimated that fouling of a vessel may increase fuel costs by up to 30%. Also, fouling on shipping signals (such as buoys) incurs substantial maintenance costs. In addition, fouling may contribute to corrosion of the material of surfaces that are effected.

In order to prevent fouling, various measures have been suggested, above all for objects such as ships and boats. For instance, a biocidal antifouling paint is traditionally applied to the underwater surfaces of vessels. The application of films having a particularly smooth surface or a specifically structured surface (e.g. fibres or an embossing), or coating with antifouling paint have been proposed. Maintenance can be simpler and the smooth or specific surfaces can also avoid or at least reduce the need to use biocidal antifouling substances. However, the use of antifouling paints typically involves coatings that purposefully release biocidal additives (such as water-soluble compounds of tin, lead or copper) into the environment, and the accumulation of such additives in marine sediments has led to widespread ban of such types of paints. Moreover, whilst ultrasonic antifouling has been used, such measure may even exacerbate corrosion.

Fouling does not only concern ships, but also fixedly installed equipment, such as pipes, buoys, linkage and cables. In contrast to ships, painting with antifouling paints or adhering antifouling films is laborious and thus also expensive. Replacing the antifouling means is even more difficult.

In order to protect objects having bent surfaces, antifouling tapes have been proposed. Such tapes can be applied more easily to bent surfaces, e.g. can be wrapped around pipes and rods. For instance, WO2018/108693 A1 describes an elastic, self-fusing tape comprising a carrier layer based on self-fusing silicone and an antifouling layer self-fusing to the carrier layer. Also described is an elastic, self-fusing tape comprising a layer made of a mixture of a self-fusing silicone with an antifouling silicone.

Moreover, self-fusing tapes are presently exclusively produced by die extrusion. Such tapes are primarily used for sealing leakages, and they are consequently produced in a width of about 10 cm only. It is uneconomical to apply fouling release coating onto such narrow tapes. Moreover, extrusion through a die limits production speed, to about 10 m/min at most.

Also, anti-fouling tapes need to be applicable onto objects in a variety of environments. They need to have properties so that they may be applied underwater, without removing the object from the water, i.e. onto wet surfaces. They also need to have sufficient strength so that they protect the object onto which they are applied from any mechanical damage during transport, as may occur when an object has the tape applied onshore (or otherwise outside the water), and the object, with applied and cured anti-fouling tape, is only afterwards transported to the site and (fully) immersed in or otherwise exposed to water. Because objects that are protected by the tape according to the invention may be large and/or heavy, protection from mechanical damage constitutes an additional challenge.

However, the tapes in accordance with WO2018/108693 A1 are unsatisfactory as they require a complicated and time-consuming extrusion process for their production. Moreover, and when following the teaching of WO2018/108693 A1, the tapes produced to not result in a satisfactory coating of the surfaces to be protected. Instead, the tapes according to WO2018/108693 A1 are released from the surfaces when the tapes are exposed to humidity for an extended period of time.

Moreover, layers based on self-fusing silicones typically comprise crosslinking agents of the polychlorinated biphenyl (PCB) type, such as bis(2,4-dichlorobenzyl)peroxide. PCB type of crosslinking agents have themselves biocidal activity and are consequently anti-fouling. However, PCBs are also toxic and carcinogenic. They degrade very slowly and may consequently accumulate in the environment and in particular in (human) fat tissue.

This is why, in many countries, the use of PCBs is subject to strict regulatory control. Because e.g. container vessels need to be able to dock in essentially any of the world's harbours, and to cross any of the world's waterways, PCB types of crosslinking agents and consequently their use in antifouling tapes are highly undesired, even if PCBs are not strictly banned in all jurisdictions.

However, alternative crosslinking agents are associated with a variety of disadvantages. For instance, and even though crosslinking agents make up only 1 to 2 wt.% of the final mixture of the layer, their influence on self-fusing is substantial. For instance, peroxides different from bis(2,4-dichlorobenzyl)peroxide would be expected to lead to slower crosslinking, and the application of self-fusing tapes to result in deterioration of performance properties of the tape, such as stiffness and tack. This would ultimately lead to disadvantages both in the production and the application of the tape (on surfaces to be protected). Known methods for the manufacture of rolls with antifouling protection in rolls can be found in DE 10 2011 050433 A1, US 4 814 227 A, JP 6 219551 B2, US 2013/048211 A1. Consequently, it was the object of the present invention to provide self-fusing tapes and kits, as well as simple methods for the production of self-fusing tapes that do not rely on the mandatory use of PCB type of crosslinking agents.

It has now been found in accordance with the present invention that the disadvantages as observed in following the teaching of WO2018/108693 A1 are overcome when a particular tape composition is processed in a simple calender process. The elastic, self-fusing tape thus produced can be stored easily as roll when employing a layer of protective film material. This roll can then advantageously be used together with sealing means and/or priming agent.

The invention has the following aspects:
In a first aspect, the invention relates to a calender process for preparing a roll.

In a second aspect, the invention relates to a roll comprising a) an elastic, self-fusing tape and b) a layer of protective film material.

In a third aspect, the invention relates to a kit comprising x) the roll of the first aspect and y) sealing means and/or priming agent.

In a fourth aspect, the invention relates to the use of the roll of the first aspect, or the kit of the second aspect, for covering an object.

In a fifth aspect, the invention relates to a method for covering an object.

In a sixth aspect, the invention relates to an object comprising a cured tape.

### Figure

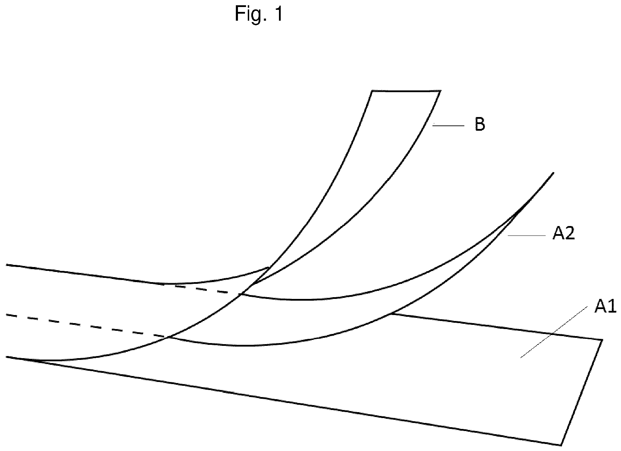

Fig. 1 shows an embodiment of the roll of the present invention, with protective film layer (**B**), self-fusing silicone layer (**A1**) and separate antifouling silicone layer (**A2**).

### Detailed disclosure of the invention

In a first aspect the invention relates to a calender process for preparing a roll comprising,
a) an elastic, self-fusing tape, the tape comprising a self-fusing silicone layer (A) prepared from a mixture comprising a first polyorganosiloxane and peroxide crosslinking agent,
b) a layer of protective film material (B),
the tape further comprising antifouling silicone prepared from a second polyorganosiloxane,
the calender process comprising
x) preparing the mixture and calendering it, to form layer (A), and
y) applying layer (B) onto layer (A).

The calender process for producing the tape according to the present invention overcomes the main disadvantage that are associated with the use of the current extrusion process, namely that the width of a die-extruded tape is typically at most 10 cm. In contrast thereto, the calender process allows for the economic production of anti-fouling tapes having a web width of up to 2 m, with production speeds of up to 50 m/min. The tapes produced in the calender process can more easily be coated with the layer of protective film material (B), and be further processed.

In a preferred embodiment, and as shown in Fig.1, a layer of self-fusing silicone (A1) is provided, a layer of antifouling silicone (A2) is applied onto layer (A1), and, finally, the layer of protective film material (B) is applied. In this embodiment, layer (A2) is narrower than layer (A1), and layer (B) is then at least as wide as layer (A1).

In particular, and even when using a chlorine-free peroxide crosslinking agent in accordance with the present invention, the tape can be prepared in a calender process, without resulting in any detrimental effects on self-fusing, even though calender processes require different processing conditions than those used for die extrusion. A compound having a too high adhesiveness would stick to the calender rolls and calendering consequently requires stiffer and less sticky materials than die extrusion. This stiffness also needs to be such that the material may be rolled to a homogeneous compound. However, the rheology of the compounded material used for calendering must not be such that heating by friction in the roller gap leads to premature crosslinking of the material. At the same time, self-fusing properties of the resultant product need to be maintained. For this reason, the Shore hardness of the material cannot simply be controlled by adding silicon oils, but is controlled by adjustment of the chain length of the polyorganosiloxanes used.

These advantages of using a calender processes are also, and in particular, achieved when producing the tape of the present invention according to the embodiment having a separate layer comprising the antifouling silicone. In this embodiment, a layer comprising self-fusing silicone and crosslinking agent is produced in the calender process and the produced layer (A1) is then in a further step coated with antifouling silicone as layer (A2), as explained in more detail below.

In a second aspect, the invention relates to a roll comprising
a) an elastic, self-fusing tape, the tape comprising a self-fusing silicone layer (A) prepared from a mixture comprising a first polyorganosiloxane and peroxide crosslinking agent, and
b) a layer of protective film material (B),
the tape further comprising antifouling silicone prepared from a second polyorganosiloxane,

The tape according to the invention is preferably free from any adhesives or any adhesive layers that would form an adhesive connection to other surfaces. The adhesion of the layers of tape of the second aspect of the invention to one another, when applying the tape onto an object by (e.g. partially overlapping) windings, is based on the principle of self-fusing; an adhesive connection to the surface onto which layer (A) of the tape is applied does not take place (unless the surface onto which layer (A) of the tape is applied itself has adhesive properties). However, tape layer (A) of the invention may in a preferred embodiment be used together with priming agent. This priming agent is applied onto the surface to be protected, prior to applying the tape, by applying layer (A) or layer (A1) onto the surface, or onto the priming agent on the surface. Moreover, the invention in a further and most preferred embodiment comprises the use of sealing means, protecting the outermost winding of the tape of the invention from undesired release with time.

The invention further solves the object of protecting pipes, rods and other elongated objects underwater by wrapping them into the elastic, self-fusing tape according to the second aspect.

Suitable objects to be covered with the tape of the second aspect of the invention are for instance all those that can be wrapped. Typically, these are elongated objects, i.e. objects that have a length that is significantly greater than their cross-section, for example, pipes and rods, wherein both round and rectangular or even differently shaped cross-sections are possible. Of course, short piping pieces or bars, the length of which is less than their cross-section, may be wrapped. It is advantageous if the object does not have any overly flat surfaces or surfaces that are barely arched. The specific material of the object is not decisive since it is not required for the tape to adhere to the object.

The tape as used according to the invention is elastic and self-fusing. Here, elastic preferably means a tear elongation measured according to DIN 53504 S1 of at least 200%, preferably at least 300% and in particular at least 500%. The upper limit is not determined by the use, but by the necessary stability of the material; it is typically at about 1000%. Furthermore, the tape preferably has a restoring force measured according to DIN 53512 of 20%, in particular of 60%, by means of which the force-fit sealing on the wrapped object is ensured. The tear strength measured according to DIN 53504 S1 is preferably at least 5 MPa, preferably at least 7 MPa and in particular at least 9 MPa. Here too, the upper limit is determined by the material.

Self-fusing means materials that form an adhesive connection with themselves, yet, in contrast to adhesives, do not adhesively connect to other surfaces. In this respect, self-fusing tapes up until now have been formed to have a single layer or had two identical external layers. In one preferred embodiment, the tape according to the invention has two different layers (A1) and (A2), i.e. there are a self-fusing and an antifouling layer, separate from but in contact with one another when in the form of the tape. The tape is nevertheless self-fusing since the material of the two layers is based on silicone. In the alternative embodiment, surprisingly, sufficient self-fusing despite the dilution of the self-fusing silicone with the antifouling silicone is achieved.

Based on silicone means that silicone is contained in such an amount that its mechanical properties define those of the layer, and fusing of layers is made possible. Typically, fillers and excipients are contained besides the silicone.

The roll according to the present invention comprises b) a layer of protective film material (B), as shown in Fig.1. Layer (B) of protective film material is applied on tape (A) in order to protect tape (A) from any undesired and premature self-fusion. Layer (B) of protective film material is removed before applying tape (A) onto the object. In a preferred embodiment, and as specifically shown in Fig. 1, layer (B) of protective film material has at least the width of layer (A1) comprising the self-fusing silicone.

In a preferred embodiment, layer b) of protective film material (B) has a thickness in a range of from 15 to 60 µm, preferably in a range of from 20 to 50 µm, more preferably in a range of from 25 to 40 µm, such as about 30 µm.

In a preferred embodiment of the second aspect of the invention, the peroxide crosslinking agent for the first polyorganosiloxane is a chlorine-free peroxide crosslinking agent.

In a preferred embodiment, the mixture comprising the first polyorganosiloxane and peroxide crosslinking agent also comprises the second polyorganosiloxane.

Single-layer tapes for preparing the roll of the invention may be used in which a self-fusing silicone tape is obtained by mixing a sufficiently elastic and tear-resistant silicone with an antifouling silicone, said self-fusing silicone tape having a fouling rate of a maximum of 5%, measured according to ASTM 6990-03 in connection with ASTM 3623-78a, a tear extension according to DIN 53504 S1 of at least 200%, a tear strength according to DIN 53504 S1 of at least 5 MPa, and a restoring force according to DIN 53512 of at least 20%. Anti-fouling silicones typically have a tear extension of only 120% and a tear strength of 2 - 2.5 MPa, which is not sufficient for (single) layers that can be used for wrapping on object. Nor would those layers (A2) be self-fusing.

Mixtures of at least 50% by weight of antifouling silicone with at most 50% by weight of self-fusing silicone have proven to be useful for tape (A). The maximum amount of antifouling silicone depends on the mechanical properties of the antifouling silicone. If the use of the antifouling silicone already results in an elastic and tear resistant layer (A), then up to 90% by weight of antifouling silicone can be contained, and as little as 10% by weight of self-fusing silicone may be sufficient. However, if the resulting tapes are barely elastic and tear-resistant, a maximum of 60 or 70% by weight of antifouling silicone should be contained, and a minimum of 30 or 40% by weight of self-fusing silicone, each based on the total amount of silicone.

Suitable self-fusing silicones, also called silicone elastomers or polyorganosiloxanes, are polymers made of bifunctional organosiloxanes, which are crosslinked by means of peroxides. Elasticity and adhesive capability of a layer are set in an inherently known manner by means of the amount of crosslinker. The crosslinking can take place at room temperature (room-temperature-vulcanizing (RTV) silicones) or preferably at an increased temperature (high-temperature-vulcanizing (HTV) silicones) of at least 80°C, e.g. up to 180°C.

With single layer tapes, when a single layer (A) is made from both self-fusing silicone and antifouling silicone, a sufficient amount of self-fusing carrier silicone is used such that the adhesive strength is at least 1 N/5cm.

In a further preferred embodiment, the tape comprises
- a self-fusing silicone layer (A1) and
- a separate layer (A2) comprising the antifouling silicone,
wherein, preferably, layer (A2) is narrower than and only covers part of layer (A1).

The materials of the self-fusing silicone layer and the antifouling silicone layer are selected in such a way that the two separate layers preferably each have an adhesive strength according to DIN 53357/A of at least 1 N/5cm, preferably at least 2 N/5cm and particularly preferred 5 N/5cm.

As the first polyorganosilicone, providing for self-fusing, so-called HTV silicones are preferred. The first polyorganosilicone gives tape (A) according to the invention its elasticity and tear strength and is also responsible for the necessary restoring force. The silicone of layer (A1) is preferably a peroxide-crosslinkable polyorganosiloxane.

The thickness of layer (A1) is preferably from 300 µm to 1 mm, particularly preferred from 450 µm to 850 µm, for example about 650 µm. Well suited are silicones which are commercially available under the name ELASTOSIL R^{™} , e.g. ELASTOSIL^{®} R 6225, ELASTOSIL^{®} R 6550, ELASTOSIL^{®} R 101/25, ELASTOSIL^{®} R 101/35, ELASTOSIL^{®} R 101/45, ELASTOSIL^{®} R 401/10, ELASTOSIL^{®} R 401/20, ELASTOSIL^{®} R 401/30 OH and ELASTOSIL^{®} R 401/30 S from Wacker Chemie AG, DE. Furthermore, the HTV silicones Addisil 140 E, Addisil 440 E, Addisil 442 E, Tufel II 94406, Tufel II 94405, Addisil IND 1040 E and Addisil IND 2040 E from Momentive Performance Materials Inc., US and the HTV silicones XIAMETER^{®} RBB- 2000-35 Base, XIAMETER^{®}RBB- 2002-30 Base, XIAMETER^{®} RBB-2002-70 Base, XIAMETER^{®} RBB-2300-30 Base, XIAMETER^{®} RBB-2030-40 Base and XIAMETER^{®} RBB-2220-55 Base from DOW Corning Corp., US, and HTV silicones from Shin-Etsu Silicones of America, Inc., US are well suited.

### Antifouling silicone

The polyorganosiloxane for the antifouling silicone may for example be a 1K, 2K or 3K silicone, e.g. with acetoxy or oxime crosslinkers. The mechanical properties of antifouling layer (A2) according to this embodiment are preferably chosen in such a way that the elasticity of layer (A1) is not impaired, i.e. the tear extension of layer (A1) is generally higher than for the layer (A2). The tear strength of antifouling layer (A2) is less important and its restoring force does not play a role. The thickness of layer (A2) is typically from 100 µm to 150 µm.

A polyorganosiloxane is used which can be obtained on the market as an antifouling silicone. Any antifouling silicone can be used that has a maximum fouling rate of 5% when measured statically for at least 1 year, preferably at least 1.5 years and particularly preferred at least of 2.5 years, according to ASTM 6990-03 in connection with ASTM 3623-78a. Fouling rate means the surface area of the sample that is covered by the growth. Silicones not especially provided with an antifouling effect, such as the self-fusing carrier silicones, for example, have a fouling rate of less than 5% for 6 months maximum. Most preferably, the fouling rate of the antifouling silicone after one year is 0%, i.e. the test sample is completely free from overgrowth.

Antifouling silicones are described, for example, in EP 2 516 559 B1 and in the prior art described therein.

The silicone of the antifouling layer (A2) is preferably a polyorganosiloxane crosslinked by acetoxy and/or oxime crosslinker.

It is preferred that antifouling layer (A2) does not contain biocidal additives, which biocidal additives, when present, would potentially and undesirably leach into the environment. The antifouling effect of such antifouling silicones is instead based on their chemical composition. Well suited silicones for the antifouling layer are, for example, SILIC PRO 77460, HEMPAGUARD 89909, SILIC ONE 77450, HEMPASILX5, HEMPASIL 77500, HEMPASIL X7, HEMPASIL Nexus and HEMPASIL X3+ 87509 with crosslinker 98980 and 98951 (Hempel A/S, DK), Intersleek 1 100 SR made of parts A, B, C and Intersleek 970, Intersleek 757, Intersleek 425, Intersleek 900 (International Paint Ltd., GB), Sea lion, Sea lion repulse, Sea lion resilient (Jotun (Germany) GmbH) and Sigmaglide 120, Sigmaglide 890, Sigmaglide 790 und Sigmaglide 990 (PPG Industries, Inc., US).

Typical widths of tape (A) of the invention are from 5 cm to 50 cm, preferably up to 30 cm, particularly preferred from 10 to 20 cm. The width constitutes a compromise: the wider the tape, the more of the surface is covered by one wrapping. However, during wrapping, sufficient tension must be exerted on the tape, which requires more and more force as the width increases. The length is not particularly limited; the rolls should be able to be handled, but must not have to be fixed too often. In this respect, lengths of 5 to 200 m, preferably 20 to 100 m, and particularly about 50 m are well suited.

The particular advantage is that, by means of the tape according to the invention, a protection can also be produced on objects that are underwater. Wrapping under tensile load sufficiently presses out the water between object and tape as well as between the windings of the tape; small left-over quantities do not negatively impact self-fusing. Adhering to the object is neither the aim of nor required in accordance with the invention; the tape is instead simply held in a force-fit manner by its elasticity by means of the restoring force.

When wrapping, a tensile load of the tape is to be maintained. Usually, when wrapping, an overlap of the tape (i.e. the winding layers) of 30 to 70%, preferably of about 50%, is provided.

Antifouling layer (A2) preferably does not cover entire self-fusing layer (A1), but rather substantially only the part of layer (A1) that is exposed after wrapping. Accordingly, antifouling layer (A2) preferably covers about 35 to 75%, preferably about 55%, of the width of self-fusing layer (A1). As a result, the amount of the more expensive antifouling silicone can be reduced, without forfeiting the antifouling effect of the tape of the invention. The surface of the tape overlapped by self-fusing layer (A1) does not contribute to the antifouling effect and, accordingly, can be implemented without an antifouling layer. A further advantage is an optimised adhesion. It is also advantageous if the silicone of self-fusing layer (A1) has a different colour or colour intensity as compared to the antifouling silicone of layer (A2). This makes it easier for the user to correctly wrap the tape around the object to be protected.

In this preferred embodiment of the tape of the invention, shown in Fig. 1, layer (A2) is narrower than and only covers part of layer (A1). This is implemented because self-fusing silicone layer (A1) only self-fuses to itself, but does not self-fuse with antifouling layer (A2).

Antifouling layer (A2) may contain at least one biocide, in particular selected from copper and copper compounds, preferably copper(II) oxide, copper pyrithione, copper thiocyanate; zinc pyrithione; one or more isothiazolinones; dichlofluanid; tolylfluanid; tralopyril; medetomidine and mixtures of two or more thereof.

Antifouling layer (A2) preferably does not contain any biocide.

It is preferred in all embodiments of the invention that the peroxide crosslinking agent is a chlorine-free peroxide crosslinking agent. Such tape self-cures under a variety of conditions and is in particular not prone to the risk of releasing PCB type of crosslinking agents.

Preferably, the chlorine-free peroxide crosslinking agent is selected from bisbenzoylperoxide, di(benzoyl)peroxide, di-(4-methylbenzoyl)peroxide, or dihexadecylperoxy dicarbonate (Aktisil Q^{®}).

In one preferred embodiment, dibenzoylperoxide is used as the chlorine-free peroxide crosslinking agent. In a second preferred embodiment, a mixture of bis(4-methylbenzoyl)peroxide with dihexadecylperoxy dicarbonate is used.

Self-fusing layer (A1) preferably does not comprise 2,4-dichloro benzoyl peroxide, more preferably does not contain any chlorine-containing crosslinking agent.

Preferably, tape (A) does not comprise 2,4-dichloro benzoyl peroxide, more preferably tape (A) does not contain any chlorine-containing crosslinking agent.

The chlorine-free peroxide crosslinking agents, as preferably used in accordance with the invention, provide to the first polyorganosiloxane of the self-fusing silicone layer those properties that are sufficient to ensure self-fusion of layer (A1). In particular, the crosslinking agent is dibenzoyl peroxide (DBP).

The silicone of self-fusing layer (A1) is a peroxide-crosslinkable polyorganosiloxane.

In a preferred embodiment, the tape further comprises a strengthening fiber,
especially a glass fiber mat. It is most preferred that the tape has a grammage in the range from 48 to 110 g/m².

In order to protect the tape (once applied) from defects, a strengthening fiber layer may be incorporated within the tape according to the invention. Whilst such strengthening fibre layer may decrease flexibility of the tape, it substantially increases firmness and resistance of the tape against accidental damage of the outermost layer of cured tape, once applied on the object.

In a further preferred embodiment, the protective film material of layer (B) is a water-soluble material. More preferably, the water-soluble material comprises polyvinyl alcohol.

The roll according to the present invention comprises a layer of protective film material. The protective film material is removed prior to applying the tape onto the object. Suitable water-soluble materials are known (Y. Pang, Dissertation, Neue Funktionspolymere für die wässrige Phase, Düsseldorf, 2005) and ensure that any parts of the protective film material that are removed from the tape prior to application (and that may inadvertently be left in the water) do not result in any environmental damage. Using water-soluble material in the layer of protective film material addresses the problem that, the more windings of roll are unrolled and the more tape is applied onto the object, the longer is the train of layer of protective film material. Such train of protective film material (and possibly entrained water) is difficult to handle when applying the tape onto the object, and needs to be cut in regular intervals when applying the tape onto the object. Cut pieces of the protective film material may inadvertently be lost, in particular when working with a transparent protective film material and underwater.

A water soluble material as the protective film material surprisingly solves any problems as associated with the mandatory use of a protective film material. Water-soluble materials are versatile, easy-to-use in practice and environmentally friendly. Water-soluble protective film materials constitute an excellent oxygen barrier, protecting the tape over time during storage, and dissolve completely in water. In particular, the water-soluble material comprises polyvinyl alcohol. Polyvinyl alcohol, once dissolved in water, is completely biodegradable. Any dissolved polyvinyl alcohol is completely converted to carbon dioxide and water by microorganisms. Published tests with concentrations of even up to 500 mg polyvinyl alcohol per 1 L of water have shown no detrimental effects on fishes. Protective film made from polyvinyl alcohol may also be incinerated without leaving any residues.

In a preferred embodiment, the water-soluble material is suitable for a temperature range of 5 °C and above. Such type of protective film is associated with the advantage that it does not need to be collected when applying the tape under water. Instead, the protective film starts to dissolve by itself or is at least softened so that it may be removed by hand. This ensures that applying the tape in accordance with the invention does not result in any unnecessary waste. Applying the tape under water is then much simplified and allows for the applying to be performed as an automised process.

In a third aspect, the invention relates to a kit comprising
a. the roll of the second aspect and
b. sealing means and/or priming agent.

In a preferred embodiment, the sealing means are selected from one or more of a sealing agent, a cuff, and a cable tie.

The tape according to the present invention can easily be provided as rolled-up product. Sealing agent is typically a viscous liquid and is typically provided in a cartridge, to be used in a standard cartridge system with a silicone gun. Priming agent is typically a liquid with low viscosity and may be provided in buckets, such as metal buckets.

When using the tape of the first aspect of the present invention, the surface onto which the tape is to be applied is preferably coated with priming agent. Use of the priming agent ensures proper adhesion of the tape of the present invention to the surface of the object.

Preferably, the priming agent and/or sealing agent comprises solvent.

Preferably, the priming agent comprises a room-temperature-vulcanizing (RTV) silicone,
preferably the RTV silicone is an acetoxy, oxime or alkoxy silicone,
more preferably the RTV silicone is an acetoxy silicone.

For instance, the priming agent may be an RTV silicone composition having a viscosity in the range of from 1 to 50 Pa·s, preferably in the range of from 5 to 40 Pa·s, more preferably in the range of from 10 to 20 Pa·s, as measured by DIN 53019.

The priming agent (preferably the RTV silicone composition) may comprise solvent in an amount in a range of from 1 to 40% by weight, preferably in an amount in the range of from 5 to 30% by weight, such as 10 to 20% by weight.

When using a priming agent, the surface that the tape according to the invention is to be applied on is coated with the priming agent, and the tape is swiftly applied onto the surface, such as by wrapping the object. The solvent in the priming agent allows for better wetting of the surface by the tape's silicone, which improves adhesion of the tape on the surface. Also, it is believed that solvent from the priming agent passes outwardly through the coils of tape, thereby promoting self-fusing of the tape.

Preferably, the sealing agent comprises a room-temperature-vulcanizing silicone. More preferably, the RTV silicone is an acetoxy, oxime or alkoxy silicone, most preferably, the sealing agent is an oxime silicone.

It has been found that the use of sealing agent substantially increases the lifetime of the tape once applied to the object. Accelerated ageing tests have shown that the adhesion of the coils of tape on one another may decrease with time. In case of defective application of the tape, undesired unrolling may occur. Using a sealing agent in accordance with the invention, with the last coil of tape on the object, crosslinks the tape chemically, inseparably and permanently. Such sealing agent may be applied underwater, which allows for the tape to be applied underwater, without the risk of undesired delamination of the tape (i.e. unrolling).

RTV silicones cross-link when exposed to humidity, and they may therefore be applied underwater. The sealing agent should preferably not contain constituents (such as oils or solvents) that may leach during application of the tape or from the object with applied tape. Therefore, long-chain and/or highly viscous silicones are preferred and ensure that the silicone is not undesirably released when applying the tape underwater.

In a fourth aspect, the invention relates to the use of the roll of the second aspect, or the kit of the third aspect, for covering an object, preferably for wrapping an object.

In a preferred embodiment, the object that is covered is a body that is to be placed into contact with fresh or seawater, such as a fixed and/or floating object. Preferably, the object is a floating body, more preferably, it is a vessel or a buoy.

The object to be protected by the self-fusing tape according to the present invention may be e.g. a channel (navigable water) or mooring buoy, a part of an oil or other drilling platform or vessel, a tube of a sonographic unit, a pontoon, a tube, a pilling, a dolphin, a mooring bit, a bollard, a rudder shaft, a floating body or a part of a houseboat or barge, or of an aluminium multihull, a monopole of a wind power plant, or some other installation for the generation of renewable energy, such as a part of a wave or tidal power plant.

Preferably, the object is a vessel or a buoy.

In a fifth embodiment, the invention relates to a method for covering an object with an elastic, self-fusing tape, comprising the following steps
(i) optionally coating at least part of at least one surface of the object with a priming agent;
(ii) applying the tape to the at least one surface of the object;
(iii) curing the tape; and
(iv) applying sealing means to at least part of the cured tape;

the tape comprising a self-fusing silicone layer prepared from a mixture comprising a first polyorganosiloxane and peroxide crosslinking agent,
the tape further comprising antifouling silicone prepared from a second polyorganosiloxane.

Preferably, the (ii) applying is by winding, preferably using a sealing agent at least underneath the final winding of the tape.

In a sixth aspect, the invention relates to an object comprising (i) a cured tape prepared from a tape comprising a self-fusing silicone layer (A) prepared from a mixture comprising a first polyorganosiloxane and peroxide crosslinking agent,
the tape further comprising antifouling silicone prepared from a second polyorganosiloxane; and
(ii) a seal covering at least part of the cured tape.

Tapes according to the invention can be produced in a known manner as such. Preferably, the material of the self-fusing layer (A1) is applied to a release liner (B) and this layer is subsequently coated with the material of the antifouling layer (A2), or vice versa. The materials are then, e.g. in the case of HTV silicones, additionally crosslinked by heating in a dry oven. Alternatively, the carrier layer and the antifouling layer can be produced separately on release liners and then brought together in a roller gap by means of pressure to form the tape according to the invention. Many silicones can be extruded, such that the tape can also be produced by means of co-extrusion, or individual layers can be extruded. Tape (A) is wound to a roll with at least one release liner (B). Suitable release liners are known to the person skilled in the art; those based on polyester or polyethylene, for example, are well suited. As usual, the production can take place in greater widths, and the tapes are brought to the desired width before rolling up by means of cutting in machine direction.

It has surprisingly been found in accordance with the present invention that the tape can be produced in a simple calender process. In a preferred production process, the self-fusing silicone layer runs through several rolls with decreasing gap distance and is therefore rolled into its form (this is in contrast to extruding into form through a wide slit die). In an extrusion process, tapes having a width of more than 10 cm cannot be produced. In addition, an extrusion process has a limited production speed of up to 10 m/min. In contrast thereto, the calender process allows for the same precision and quality of the layers to be produced with a width of up to 2 meters, with a production speed of up to 50 m/min. Therefore, the use of the calander process allows for the effective production of self-fusing silicone layer (A1), either comprising the antifouling silicone, or having the antifouling silicone as a separate layer (A2).

It is a great advantage of the invention that the present tape can be easily removed in order to renew the protection. It is sufficient to cut the layers along the object, e.g. by means of a knife, and to then remove them. Since no adhesion is formed between the tape and the object, it is also not necessary to clean the surface from any remaining material of tape (A). Even when using a priming agent, removing the tape from the surface can be effected without difficulty. Fouling organisms on the used tape are removed along with it. New tape is then simply wrapped around the object after removing the old, sliced tape.

Also, the sealing agent is preferably substantially pure.

RTV silicones crosslink via humility and may therefore also be used under water. The silicone must be pure, such that no constituents may be diluted from the silicone during crosslinking (such as oils or solvents), and it should be long-chain or highly viscous, such that it does not unduly spread underwater during crosslinking. Because the tape is applied onto the object most preferably by winding, the sealing agent provides for the sealing of the last wicking. Sealing the last wicking insures that no delamination of the tape from the object may occur.

A preferred silicone for sealing the final wicking of the tape once applied onto the object is Novasil SSP 5530 of Otto Chemie, Fridolfing, Federal Republic of Germany

As water-soluble material of the protective film, polyvinyl alcohols are preferably used. Polyvinyl alcohol is preferably produced by hydrolysis of the acetate group of polyvinyl acetate. Partially hydrolysed types having a maximum of 12% PVAC units are well soluble (even at below 10°C water temperature). With increasing degree of hydrolysis, water solubility (below 10°C) is reduced, which renders such materials less suitable as water-soluble and self-dissolving protective film.

Preferably, a material is used as the protective film material that is a polyvinyl alcohol having about 5-12% of PVAC, preferably 8-11% PVAC.

Water-soluble films are versatile, easy to handle and environmentally friendly. These films give an excellent oxygen barrier and dissolve completely in water. Water-soluble films made from polyvinyl alcohol are biodegradable and may therefore replace packaging in an environmentally friendly manner. Polyvinyl alcohol films, once dissolved in water, are biodegradable because the solution is converted by microorganisms in the water to carbon dioxide and water. Published tests with concentrations of 500 mg polyvinyl alcohol per litre of water show no observable effect on living fish. When burnt, polyvinyl alcohol film reacts residue-free to carbon dioxide and water. Particular polyvinyl alcohol films are advantageous because they do not need to be replaced under water when applying the tape. Instead, the protective film material easily dissolves in water, or is at least softened such that it may be ripped off by hand. Therefore, when applying the roll according to the invention, no leftover waste is produced.

Preferably, self-fusing silicones cross-linkable with peroxide are mixed with some amount of boric acid present, and layer (A1) may comprise self-fusing silicone of the peroxide-cross-linkable type, chlorine-free peroxide crosslinking agent, and boric acid. Boric acid influences the viscoelastic properties of layer (A1), and such layer may therefore be crosslinked at lower temperatures (120 to 145°C), whilst being well-processable. In the uncured state, layer (A1) still shows a certain fluidity and self-fuses. It is preferred that a silicone is used wherein the self-fusing effect is not influenced by water.

When using self-fusing silicone of the peroxide-cross-linkable type, the self-fusing and the high elasticity allow the tape to be applied to a large variety of material surfaces in an easy manner, even under water.

When preparing layer (A1) in an extrusion process, it is preferred to target a Shore hardness in the range of from 30 to 90, preferably in a range of from 40 to 80, such as 50 to 70, e.g. about 60. A layer (A1) having a composition with a Shore hardness in that range can be processed easily. Typically, the Shore hardness of the composition of layer (A1) may be controlled by:

### 1. The chain length of the self-fusing silicone

The chain length of the uncured self-fusing silicone, such as self-fusing silicone of the peroxide-cross-linkable type, may be in a range of from 10,000 to 100,000 Si-H units. In an uncured state, the monomer may therefore be a highly-viscous paste (when using silicones having a lower chain length), up to a sticky, plastic and kneadable mass (when using higher chain length). Short-chain silicones may be processed more easily and are less expensive. However, they possess poorer mechanical properties. In a given formulation and in cured state, tensile strength, tear resistance, elongation at break and Shore hardness of a short-chain silicone is lower than with a long-chain silicone.

### 2. Silica, SiO₂

Layer (A1) may be filled with silica. Silica is well compatible with silicones and causes no blooming effect. The higher the silica content of the composition of layer (A1), the stiffer (higher Shore hardness) and drier is the composition, i.e. the composition when cured does no longer feel so sticky. The filling of the composition of layer (A1) with silica makes the composition less expensive, however, the mechanical properties may be poorer, because elasticity, tensile strength and tear resistance are reduced. It is preferred in all embodiments of the present invention that layer (A1) comprises silica in a range of from 3 to 9% by weight of silica, preferably 5 to 7% by weight.

### 3. Silicone oils

Silicone oils in the composition of layer (A1) serve as plasticisers. They are typically silane-based and co-crosslink when the self-fusing silicone is crosslinked. Silicone oils also make a tape softer. Use of silicone oils allows for control of the hardness of the cured composition of layer (A1), but they change the mechanical properties of the composition of layer (A1): The composition becomes more elastic, but the plastic component of the elongation increases and the elastic restoring force decreases with increasing content of the composition of layer (A1) in silicone oil. It is preferred in all embodiments in the present invention that the composition of layer (A1) comprises in a range of from 10 to 30 percent by weight of silicone oil, preferably 7.5 to 25 percent by weight, in particular 10 to 20 percent by weight.

A preferred composition of layer (A1) is as follows:
- Silicone having in a range of from 30.000 to 80.000 Si-H units,
- Silica in an amount of from 5 to 7 percent by weight,
- 10 to 20 percent by weight of silicone oil, and
- Boric acid in an amount of 2 to 4 percent by weight.

Such composition can be extruded easily and gives the desired properties.

When preparing such composition, to give layer (A1), the components may be mixed in a mixing mill at around 45°C and are then fed to an extruder, from which layer (A1) is extruded under pressure through a wide slit die, to give layer (A1) its final form. After having exited the die, the composition is fed to temper rolls where it is kept at typically 120 to 140°C to initiate crosslinking of the crosslinking agent, thereby crosslinking the silicone.

### Examples

Six different formulations were made, wherein dichlorobenzoylperoxide crosslinking agent (as in Formulation E) was replaced with stoichiometric amounts of the crosslinker to be tested. All formulations therefore differed only in the type of crosslinker, except for comparative Formulation A which was used as received and was presumed to contain about 1.5 percent by weight of crosslinking agent of the additive type. The crosslinkers were mixed into the silicone in the rolling mill and crosslinking was completed in the laboratory press at 130°C. Formulation E contains Bis(dichlorobenzoyl)peroxide.

| | **A (comparative)** | **B** | **C** | **D** | **E** |
|---|---|---|---|---|---|
| HTV 85 K value | 100 | 100 | 100 | 100 | 100 |
| Boric acid | 4.2 | 4.2 | 4.2 | 4.2 | 4.2 |
| DCBP¹ | | | | | 1.5 |
| Platinum crosslinker² | 1.5 | | | | |
| PMBP³ | | 1.35 | | | |
| DCP⁴ | | | 0.7 | | |
| DBP⁵ | | | | 1.2 | |
| properties after completion of crosslinking at 130°C⁶ | too dry | Crosslinking low | crosslinking low | crosslinking high | very good |

| | | | | | |
|---|---|---|---|---|---|
| ¹ Bis-(2,4-dichlorobenzoyl)peroxide ² Platinum crosslinking catalyst ³ Bis-(4-methylbenzoyl)peroxide ⁴ Di(cumyl)peroxide ⁵ Dibenzoylperoxide ⁶ Formulation B (with bis-(4-methylbenzoyl)peroxide crosslinker), Formulation C (with di(cumyl)peroxide crosslinker) and comparative Formulation A (with a crosslinker of the additive type) resulted in a sample having low crosslinking. Therefore, these compositions were processed to completion of crosslinking at 170°C in the press. | | | | | |

From these experiments, it is apparent that bis(2,4-dichlorobenzoyl)peroxide shows the fastest crosslinking, even faster than crosslinking by addition. Crosslinking by addition is favorable because it can tolerate carbon black types, and does not result in cleavage products. The advantage of peroxide crosslinking, however, is that this type of crosslinking is tolerant against catalyst poisons and that the product can be stored for a longer period of time ("ready to use").

Comparing vulcanization with bis-(2,4-dichlorobenzoyl)peroxide with crosslinking with different amounts of bis-(4-methylbenzoyl)peroxide) shows the advantageous fast crosslinking with DCBP, less unpleasant smell and lower tendency to yellowing. Bis-(4-methylbenzoyl)peroxide has the advantage of being less sensitive to inhibition by carbon black and less of a blooming effect.

Formulation C performed well after additional crosslinking at 170°C, but the self-fusing properties were considered low. For Formulation C, crosslinking at 120°C was tried. Formulation C with 1.2 percent by weight of dibenzoylperoxide improved self-fusing to an acceptable level, even though the self-fusing properties are poorer than in Formulation E with bis(2,4-dichlorobenzoyl)peroxide.

Formulation B to E can be calendered.

## Claims

1. A calender process for preparing a roll comprising,
a) an elastic, self-fusing tape, the tape comprising a self-fusing silicone layer (A) prepared from a mixture comprising a first polyorganosiloxane and peroxide crosslinking agent,
b) a layer of protective film material (B),
the tape further comprising antifouling silicone prepared from a second polyorganosiloxane,
the process comprising
x) preparing the mixture and calendering it, to form layer (A), and
y) applying layer (B) onto layer (A).

2. A roll comprising
a) an elastic, self-fusing tape, the tape comprising a self-fusing silicone layer (A) prepared from a mixture comprising a first polyorganosiloxane and peroxide crosslinking agent, and
b) a layer of protective film material (B),
the tape further comprising antifouling silicone prepared from a second polyorganosiloxane.

3. The roll of claim 2, wherein the peroxide crosslinking agent is a chlorine-free peroxide crosslinking agent.

4. The roll of claim 2 or claim 3, wherein the mixture comprising a first polyorganosiloxane and peroxide crosslinking agent also comprises the second polyorganosiloxane,
preferably wherein the self-fusing silicone is a high-temperature-vulcanising (HTV) silicone.

5. The roll of claim 2 or claim 3, wherein the tape comprises
- self-fusing silicone layer (A1) and
- a separate layer (A2) comprising the antifouling silicone,
wherein, preferably, layer (A2) is narrower than and only covers part of layer (A1),
preferably wherein the self-fusing silicone is a high-temperature-vulcanising (HTV) silicone.

6. The roll of claim 3, or any of claims 4 or 5 when dependent from claim 3, wherein the chlorine-free peroxide crosslinking agent is selected from the group consisting of bisbenzoylperoxide, di(benzoyl)peroxide, di-(4-methylbenzoyl)peroxide, or dihexadecylperoxy dicarbonate,
in particular wherein the crosslinking agent is dibenzoyl peroxide.

7. The roll of any one of preceding claims 2 to 6, wherein the tape further comprises a strengthening fiber, especially a glass fiber mat,
preferably wherein the tape has
a separate strengthening fiber layer.

8. The roll of any one of preceding claims 2 to 7, wherein the protective film material is a water-soluble material,
preferably wherein the water-soluble material comprises polyvinyl alcohol.

9. Kit comprising
x) the roll of any of preceding claims 2 to 8, and
y) sealing means and/or priming agent.

10. The kit of claim 9, wherein the sealing means are selected from one or more of a sealing agent, a cuff, and a cable tie.

11. The kit of claim 9 or claim 10, wherein the priming agent and/or the sealing agent comprises solvent.

12. The kit any of claims 9 to 11, wherein the priming agent comprises a room-temperature-vulcanising (RTV) silicone,
preferably wherein the RTV silicone is an acetoxy, oxime or alkoxy silicone,
more preferably wherein the RTV silicone is an acetoxy silicone.

13. The kit of claim 11, wherein the sealing agent comprises a room-temperature-vulcanizing silicone,
preferably wherein the RTV silicone is an acetoxy, oxime or alkoxy silicone,
more preferably oxime silicone.

14. Use of the roll of any one of claims 2 to 8, or the kit of any one of claims 9 to 13, for covering an object, preferably for wrapping the object.

15. The use of claim 14, wherein the object is a floating body,
preferably wherein the object is a vessel or a buoy.

16. A method for covering an object with an elastic, self-fusing tape, comprising the following steps
(i) optionally coating at least part of at least one surface of the object with a priming agent;
(ii) applying the tape to the at least one surface of the object;
(iii) curing the tape; and
(iv) applying sealing means to at least part of the cured tape;
the tape comprising a self-fusing silicone layer prepared from a mixture comprising a first polyorganosiloxane and peroxide crosslinking agent,
the tape further comprising antifouling silicone prepared from a second polyorganosiloxane.

17. The method of claim 16, wherein step (ii) applying comprises winding.

18. An object comprising
(i) a cured tape prepared from a tape comprising a self-fusing silicone layer (A) prepared from a mixture comprising a first polyorganosiloxane and peroxide crosslinking agent, the tape further comprising antifouling silicone prepared from a second polyorganosiloxane; and
(ii) a seal covering at least part of the cured tape.

## Patentansprüche

1. Kalanderverfahren zur Herstellung einer Rolle, umfassend,
a) ein elastisches, selbstverschweißendes Band, wobei das Band eine selbstverschweißende Silikonschicht (A) umfasst, die aus einer Mischung hergestellt ist, die erstes Polyorganosiloxan und Peroxid-Vernetzungsmittel umfasst,
b) eine Schicht von Schutzfilmmaterial (B),
wobei das Band außerdem Antifouling-Silikon umfasst, das aus zweitem Polyorganosiloxan hergestellt ist,
wobei das Verfahren
x) Herstellen der Mischung und Kalandrieren derselben, um die Schicht (A) zu bilden, und
y) Aufbringen der Schicht (B) auf die Schicht (A)
umfasst.

2. Rolle umfassend
a) ein elastisches, selbstverschweißendes Band, wobei das Band eine selbstverschweißende Silikonschicht (A) umfasst, die aus einer Mischung hergestellt ist, die erstes Polyorganosiloxan und Peroxid-Vernetzungsmittel umfasst, und
b) eine Schicht von Schutzfilmmaterial (B),
wobei das Band außerdem Antifouling-Silikon umfasst, das aus zweitem Polyorganosiloxan hergestellt ist.

3. Rolle nach Anspruch 2, wobei das Peroxid-Vernetzungsmittel ein chlorfreies Peroxid-Vernetzungsmittel ist.

4. Rolle nach Anspruch 2 oder 3, wobei die Mischung aus erstem Polyorganosiloxan und Peroxid-Vernetzungsmittel auch das zweite Polyorganosiloxan umfasst, vorzugsweise wobei das selbstverschweißende Silikon ein hochtemperaturvulkanisierendes (*high-temperature-vulcanising,* HTV) Silikon ist.

5. Die Rolle nach Anspruch 2 oder Anspruch 3, wobei das Band umfasst
- selbstverschweißende Silikonschicht (A1) und
- eine separate Schicht (A2), die das foulingverhindernde Silikon enthält,
wobei vorzugsweise die Schicht (A2) schmaler ist als die Schicht (A1) und nur einen Teil davon bedeckt,
vorzugsweise wobei das selbstverschweißende Silikon ein hochtemperaturvulkanisierendes (HTV) Silikon ist.

6. Rolle nach Anspruch 3, oder einem der Ansprüche 4 oder 5 in Abhängigkeit von Anspruch 3, wobei das chlorfreie Peroxid-Vernetzungsmittel ausgewählt ist aus der Gruppe bestehend aus Bisbenzoylperoxid, Di(benzoyl)peroxid, Di-(4-methyl-benzoyl)peroxid oder Dihexadecylperoxydicarbonat,
insbesondere wobei das Vernetzungsmittel Dibenzoylperoxid ist

7. Rolle nach einem der vorhergehenden Ansprüche 2 bis 6, wobei das Band außerdem eine verstärkende Faser umfasst, insbesondere eine Glasfasermatte,
vorzugsweise wobei das Band
eine separate verstärkende Faserschicht
aufweist.

8. Rolle nach einem der vorhergehenden Ansprüche 2 bis 7, wobei das Schutzfilmmaterial ein wasserlösliches Material ist,
vorzugsweise wobei das wasserlösliche Material Polyvinylalkohol umfasst.

9. Kit umfassend
x) die Rolle nach einem der vorhergehenden Ansprüche 2 bis 8 und
y) Dichtungsmittel und/oder Grundierungsmittel.

10. Kit nach Anspruch 9, wobei die Dichtungsmittel aus einem oder mehreren von Versiegelungsmittel, Manschette und Kabelbinder ausgewählt sind.

11. Kit nach Anspruch 9 oder Anspruch 10, wobei das Grundierungsmittel und/oder das Versiegelungsmittel Lösungsmittel enthält.

12. Kit nach einem der Ansprüche 9 bis 11, wobei das Grundierungsmittel bei Raumtemperatur vulkanisierendes (*room-temperature-vulcanising*, RTV) Silikon umfasst,
wobei das RTV-Silikon vorzugsweise Acetoxy-, Oxim- oder Alkoxysilikon ist,
vorzugsweise wobei das RTV-Silikon Acetoxysilikon ist.

13. Kit nach Anspruch 11, wobei das Versiegelungsmittel bei Raumtemperatur vulkanisierendes Silikon umfasst,
vorzugsweise wobei das RTV-Silikon Acetoxy-, Oxim- oder Alkoxysilikon ist,
bevorzugter Oximsilikon.

14. Verwendung der Rolle nach einem der Ansprüche 2 bis 8 oder des Kits nach einem der Ansprüche 9 bis 13 zum Abdecken eines Gegenstands, vorzugsweise zum Umhüllen des Gegenstands.

15. Verwendung nach Anspruch 14, wobei der Gegenstand ein Schwimmkörper ist, vorzugsweise wobei der Gegenstand ein Schiff oder eine Boje ist.

16. Verfahren zum Bedecken eines Gegenstandes mit einem elastischen, selbstverschweißenden Band, mit den folgenden Schritten
(i) optionales Beschichten mindestens eines Teils mindestens einer Oberfläche des Gegenstandes mit Grundierungsmittel,
(ii) Anbringen des Bandes auf der mindestens einen Oberfläche des Objekts,
(iii) Härten des Bandes, und
(iv) Anbringen von Dichtungsmittel auf mindestens einem Teil des gehärteten Bandes,
wobei das Band eine selbstverschweißende Silikonschicht umfasst, die aus einer Mischung hergestellt ist, die erstes Polyorganosiloxan und Peroxid-Vernetzungsmittel umfasst,
wobei das Band außerdem Antifouling-Silikon, das aus zweitem Polyorganosiloxan hergestellt ist, enthält.

17. Verfahren nach Anspruch 16, wobei Schritt (ii) Anbringen Wickeln umfasst.

18. Gegenstand umfassend
(i) ein gehärtetes Band, das aus einem Band hergestellt ist, das eine selbstverschweißende Silikonschicht (A) umfasst, die aus einer Mischung hergestellt ist, die erstes Polyorganosiloxan und Peroxid-Vernetzungsmittel umfasst, wobei das Band ferner Antifouling-Silikon umfasst, das aus zweitem Polyorganosiloxan hergestellt ist, und
(ii) eine Dichtung, die mindestens einen Teil des gehärteten Bandes bedeckt.

## Revendications

1. Processus de calandrage pour préparer un rouleau comprenant,
a) un ruban élastique, auto-fusible, le ruban comprenant une couche de silicone auto-fusible (A) préparée à partir d'un mélange comprenant un premier polyorganosiloxane et un agent de réticulation peroxyde,
b) une couche de matériau de film protecteur (B),
le ruban comprenant en outre un silicone antisalissure préparé à partir d'un deuxième polyorganosiloxane,
le processus comprenant
x) la préparation du mélange et son calandrage, pour former la couche (A), et
y) l'application de la couche (B) sur la couche (A).

2. Rouleau comprenant
a) un ruban élastique, auto-fusible, le ruban comprenant une couche de silicone auto-fusible (A) préparée à partir d'un mélange comprenant un premier polyorganosiloxane et un agent de réticulation peroxyde, et
b) une couche de matériau de film protecteur (B),
le ruban comprenant en outre un silicone antisalissure préparé à partir d'un deuxième polyorganosiloxane.

3. Rouleau selon la revendication 2, dans lequel l'agent de réticulation peroxyde est un agent de réticulation peroxyde exempt de chlore.

4. Rouleau selon la revendication 2 ou la revendication 3, dans lequel le mélange comprenant un premier polyorganosiloxane et un agent de réticulation peroxyde comprend également le deuxième polyorganosiloxane,
de préférence dans lequel le silicone auto-fusible est un silicone à vulcanisation à haute température (HTV).

5. Rouleau selon la revendication 2 ou la revendication 3, dans lequel le ruban comprend
- une couche de silicone auto-fusible (A1) et
- une couche séparée (A2) comprenant le silicone antisalissure,
dans lequel, de préférence, la couche (A2) est plus étroite que et ne couvre qu'une partie de la couche (A1),
de préférence dans lequel le silicone auto-fusible est un silicone à vulcanisation à haute température (HTV).

6. Rouleau selon la revendication 3, ou l'une quelconque des revendications 4 ou 5 lorsqu'elles dépendent de la revendication 3, dans lequel l'agent de réticulation peroxyde exempt de chlore est sélectionné dans le groupe constitué par le peroxyde de bisbenzoyle, le peroxyde de di(benzoyle), le peroxyde de di-(4-méthylbenzoyle) ou le peroxydicarbonate de di-hexadécyle, en particulier dans lequel l'agent de réticulation est le peroxyde de dibenzoyle.

7. Rouleau selon l'une quelconque des revendications précédentes 2 à 6, dans lequel le ruban comprend en outre une fibre de renforcement, en particulier une natte de fibres de verre,
de préférence dans lequel le ruban a
une couche de fibres de renforcement séparée.

8. Rouleau selon l'une quelconque des revendications précédentes 2 à 7, dans lequel le matériau de film protecteur est un matériau soluble dans l'eau,
de préférence dans lequel le matériau soluble dans l'eau comprend de l'alcool polyvinylique.

9. Kit comprenant
x) le rouleau selon l'une quelconque des revendications précédentes 2 à 8, et
y) des moyens d'étanchéité et/ou un agent primaire.

10. Kit selon la revendication 9, dans lequel les moyens d'étanchéité sont sélectionnés parmi un ou plusieurs parmi un agent d'étanchéité, un brassard et un attache-câble.

11. Kit selon la revendication 9 ou la revendication 10, dans lequel l'agent primaire et/ou l'agent d'étanchéité comprend un solvant.

12. Kit selon l'une quelconque des revendications 9 à 11, dans lequel l'agent primaire comprend un silicone à vulcanisation à température ambiante (RTV),
de préférence dans lequel le silicone RTV est un silicone acétoxy, oxime ou alcoxy,
de manière davantage préférée dans lequel le silicone RTV est un silicone acétoxy.

13. Kit selon la revendication 11, dans lequel l'agent d'étanchéité comprend un silicone à vulcanisation à température ambiante,
de préférence dans lequel le silicone RTV est un silicone acétoxy, oxime ou alcoxy,
de manière davantage préférée un silicone oxime.

14. Utilisation du rouleau selon l'une quelconque des revendications 2 à 8, ou du kit selon l'une quelconque des revendications 9 à 13, pour couvrir un objet, de préférence pour envelopper l'objet.

15. Utilisation selon la revendication 14, dans laquelle l'objet est un corps flottant,
de préférence dans laquelle l'objet est un navire ou une bouée.

16. Procédé de recouvrement d'un objet avec un ruban élastique, auto-fusible, comprenant les étapes suivantes
(i) en option revêtement au moins en partie d'au moins une surface de l'objet avec un agent primaire ;
(ii) application du ruban sur l'au moins une surface de l'objet ;
(iii) durcissement du ruban ; et
(iv) application de moyens d'étanchéité sur au moins une partie du ruban durci ;
le ruban comprenant une couche de silicone auto-fusible préparée à partir d'un mélange comprenant un premier polyorganosiloxane et un agent de réticulation peroxyde,
le ruban comprenant en outre un silicone antisalissure préparé à partir d'un deuxième polyorganosiloxane.

17. Procédé selon la revendication 16, dans lequel l'étape (ii) d'application comprend l'enroulement.

18. Objet comprenant
(i) un ruban durci préparé à partir d'un ruban comprenant une couche de silicone auto-fusible (A) préparée à partir d'un mélange comprenant un premier polyorganosiloxane et un agent de réticulation peroxyde, le ruban comprenant en outre un silicone antisalissure préparé à partir d'un deuxième polyorganosiloxane ; et
(ii) un joint couvrant au moins une partie du ruban durci.
